Europäisches Patentamt

European Patent Office

Office européen des brevets

(19)

(11) **EP 1 151 605 B1**

(12) **EUROPÄISCHE PATENTSCHRIFT**

(45) Veröffentlichungstag und Bekanntmachung des Hinweises auf die Patenterteilung:
**02.05.2003 Patentblatt 2003/18**

(21) Anmeldenummer: **00908976.4**

(22) Anmeldetag: **01.02.2000**

(51) Int Cl.⁷: **H04N 5/45**

(86) Internationale Anmeldenummer:
**PCT/DE00/00293**

(87) Internationale Veröffentlichungsnummer:
**WO 00/048396 (17.08.2000 Gazette 2000/33)**

(54) **VERFAHREN UND VORRICHTUNG ZUR GEMEINSAMEN DARSTELLUNG WENIGSTENS EINER ERSTEN UND ZWEITEN BILDFOLGE IN EINEM GESAMTBILD**

METHOD AND DEVICE FOR SIMULTANEOUSLY REPRESENTING AT LEAST A FIRST AND A SECOND SEQUENCE OF PICTURES IN AN OVERALL PICTURE

PROCEDE ET DISPOSITIF POUR LA REPRESENTATION COMMUNE D'AU MOINS UNE PREMIERE ET UNE DEUXIEME SEQUENCES IMAGE DANS UNE IMAGE D'ENSEMBLE

(84) Benannte Vertragsstaaten:
**DE FR GB IT NL**

(30) Priorität: **09.02.1999 DE 19905314**

(43) Veröffentlichungstag der Anmeldung:
**07.11.2001 Patentblatt 2001/45**

(73) Patentinhaber: **Micronas Munich GmbH**
**81541 München (DE)**

(72) Erfinder: **SCHEFFLER, Günter**
**D-80939 München (DE)**

(74) Vertreter: **Bickel, Michael**
**Westphal - Mussgnug & Partner**
**Patentanwälte**
**Mozartstrasse 8**
**80336 München (DE)**

(56) Entgegenhaltungen:
**EP-A- 0 471 878       EP-A- 0 739 130**
**DE-C- 19 534 781       US-A- 5 726 715**
**US-A- 5 729 300**

**Beschreibung**

Die vorliegende Erfindung betrifft ein Verfahren zur gemeinsamen Darstellung wenigstens einer ersten und zweiten Bildfolge, die von zwei nicht synchronen Videoquellen zur Verfügung gestellt werden, in einem Gesamtbild. Das Verfahren dient insbesondere der Verwendung in Geräten zur Videosignalverarbeitung, wie z.B. Fernsehgeräten, bei denen eine Flimmerbefreiung der auf einem Bildschirm darzustellenden Bilder dadurch erreicht wird, daß die von den Videoquellen mit einer vorgegebenen Wiedergabefrequenz empfangenen Bildfolgen mit der doppelten Wiedergabefrequenz am Bildschirm dargestellt werden. Die von den Videoquellen gelieferten Bildfolgen liegen dabei insbesondere als Folgen von ersten und zweiten Halbbildern vor, die jeweils in zeilenverkämmten Rastern auf einem Bildschirm dargestellt werden.

Die flimmerfreie Darstellung eines aus Halbbildern bestehenden Bildes erfolgt zeilenweise in einem Wiedergaberaster, wobei in periodischer Abfolge die ungeradzahligen Bildzeilen, das sogenannte $\alpha$-Raster, und die geradzahligen Bildzeilen, das sogenannte $\beta$-Raster, jeweils zweimal unmittelbar aufeinanderfolgend abgetastet werden. Bei der sogenannten AABB-Wandlung eines 50Hz-Fernsehbildes werden jeweils zweimal unmittelbar aufeinanderfolgend ein erstes Halbbild im $\alpha$-Raster und ein zweites Halbbild im $\beta$-Raster dargestellt. Das dargestellte Bild erscheint so für das menschliche Auge flimmerfrei mit einer Frequenz von 100Hz.

Aus dem Dokument US-A-5 726 715 ist ein Verfahren bekannt, bei dem gleichzeitig zwei Videobildfolgen dargestellt werden können. Dabei werden die beiden zugehörigen Bilddatensignale in jeweilige Bildspeicher eingeschrieben und unter der Kontrolle eines periodischen Rastersignals ausgelesen. Die Phasenverschiebung des Rastersignals zu dem zweiten Bildsignal ist einstellbar und wird so gewählt, daß das ausgelesene zweite Bildsignal in Phase mit dem ausgelesenen ersten Bildsignal ist.

Aus der DE 195 34 781 C1 ist ein Verfahren zur sogenannten Bild-in-Bild-Einblendung bekannt, bei dem ein von einer Videoquelle geliefertes Bild verkleinert in einem Hauptbild dargestellt werden soll. Das einzublendende Bild liegt bei dem Verfahren als Halbbildfolge mit einer Wiedergabefrequenz von 50Hz vor. Das zweite Bild liegt als Halbbildfolge mit der doppelten Wiedergabefrequenz, also 100Hz, vor, wobei jedes Halbbild des Hauptbildes jeweils zweimal unmittelbar aufeinanderfolgend zur Verfügung gestellt wird. Zur Verdopplung der Wiedergabefrequenz des einzublendenden Bildes werden die ersten und zweiten Halbbilder jeweils in einen Halbbildspeicher eingeschrieben und pro Schreibvorgang zweimal ausgelesen. Der zeitliche Verlauf des Lesevorgangs, insbesondere der Lesestart, erfolgt dabei abhängig von der Darstellung des Hauptbildes.

Da das einzublendende Bild und das Hauptbild nicht synchronisiert zur Verfügung gestellt werden, kann dabei das Problem auftreten, daß bei Einschreiben eines Halbbildes des einzublendenden Bildes in einen der Halbbildspeicher ein Lesevorgang stattfindet, der den Schreibvorgang überholt. In dem im Hauptbild eingeblendeten Bild werden dann Bildanteile sichtbar, die in zwei unterschiedlichen, also zeitlich beabstandeten Schreibvorgängen in den Speicher eingeschrieben wurden. Bei bewegten Bildern wird zwischen diesen Bildanteilen ein störender Versatz sichtbar, der als "Joint Line" bezeichnet wird. Bei dem bekannten Verfahren wird zur Verhinderung einer solchen Joint Line die Phasenverschiebung zwischen dem einzublendenden Bild und dem Hauptbild ausgewertet, wobei abhängig von der ermittelten Phasenverschiebung entschieden wird, ob die ersten Halbbilder oder die zweiten Halbbilder des einzublendenden Bildes im $\alpha$-Raster und die jeweils anderen Halbbilder im $\beta$-Raster dargestellt werden sollen. Man macht sich hierbei zunutze, daß bei manchen Phasenverschiebungen bei Auslesen aus einem der Halbbildspeicher ein Überholen des Schreibzeigers durch den Lesezeiger auftreten kann, während bei Auslesen aus dem jeweils anderen Halbbildspeicher bei dieser Phasenverschiebung ein derartiges Überholen nicht auftreten kann. Allerdings gibt es Phasenverschiebungen zwischen dem einzublendenden Bild und dem Hauptbild, bei denen bei Auslesen des einzublendenden Bildes aus dem Bildspeicher sowohl bei Darstellung des ersten Halbbildes im $\alpha$-Raster als auch bei Darstellung des zweiten Halbbildes im $\alpha$-Raster eine Joint Line auftritt, so daß das bekannte Verfahren Joint Lines nicht vollständig verhindern kann.

Weitere bekannte Verfahren zur Verhinderung derartiger Joint Lines sehen die Verwendung größerer Speicher vor, um ein Überholen des Schreibzeigers durch den Lesezeiger zu verhindern. Allerdings setzen diese Verfahren neben einem höheren Speicheraufwand eine aufwendige Speicherplatzverwaltung voraus.

Aufgabe der vorliegenden Erfindung ist es, ein verbessertes Verfahren zur gemeinsamen Darstellung wenigstens einer ersten und zweiten Bildfolge zur Verfügung zu stellen, das eine Darstellung der Bildfolgen ohne Joint Lines ermöglicht, bei dem die Bildfolgen zudem in ihrer Darstellung frei skalierbar und positionierbar sind und bei dem sich die oben genannten Nachteile nicht ergeben.

Diese Aufgabe wird durch ein Verfahren gemäß der Merkmale des Anspruchs 1 gelöst.

Danach sieht das Verfahren vor, die zu einem Bild der ersten Bildfolge gehörenden Bilddaten in Form eines ersten Bilddatensignals in einem ersten Bildspeicher abzuspeichern, die zu einem Bild der zweiten Bildfolge gehörenden Bilddaten in Form eines zweiten Bilddatensignals in einem zweiten Bildspeicher abzuspeichern und die Bilddaten nach Maßgabe eines periodischen Rastersignals aus dem ersten und zweiten Bildspeicher auszulesen, wobei eine Phasenverschiebung des Rastersignals abhängig von dem ersten und/oder zweiten Bilddatensignal einstellbar ist.

Diese Anpassung der Phasenverschiebung des Rastersignals ermöglicht ein Auslesen der Bilddaten aus dem ersten und zweiten Bildspeicher ohne Auftreten einer Joint Line bei gemeinsamer Darstellung der Bildfolgen auf einem Bildschirm.

Vorteilhafte Ausgestaltungen der Erfindung sind Gegenstand der Unteransprüche.

Eine Ausführungsform der Erfindung sieht vor, daß die erste und zweite Bildfolge jeweils aus einer Folge von ersten und zweiten Halbbildern bestehen, wobei Bilddaten erster Halbbilder jeweils in einem ersten Halbbildspeicher und Bilddaten zweiter Halbbilder jeweils in einem zweiten Halbbildspeicher des ersten und zweiten Bildspeichers gespeichert werden.

Gemäß einer weiteren Ausführungsform der Erfindung ist vorgesehen, daß das erste Bilddatensignal vor dem Abspeichern um einen ersten Dezimierungsfaktor dezimiert wird und daß die Phasenverschiebung des Rastersignals abhängig von dem ersten Dezimierungsfaktor eingestellt wird. Bei einer zeilenmäßig dezimierten Darstellung eines Bildes tritt insbesondere das Problem auf, daß zum Auslesen der Bildinformation nur eine Zeitdauer zur Verfügung steht, die abhängig ist von der Zeilenanzahl des'reduzierten Bildes und damit von dem Dezimierungsfaktor, während die zum Einschreiben benötigte Zeitdauer abhängig von der Frequenz ist, mit der die Bilder der Bildfolgen zur Verfügung stehen, und die damit konstant ist. Ein Überholen des Schreibzeigers durch den Lesezeiger kann durch Einstellen einer Phasenverschiebung des den Auslesevorgang steuernden Rastersignals abhängig von dem ersten Dezimierungsfaktor verhindert werden.

Weiterhin ist vorgesehen, die Phasenverschiebung des Rastersignals schrittweise einzustellen, wobei in einem ersten Verfahrensschritt eine erste Phasenverschiebung abhängig von dem ersten Dezimierungsfaktor eingestellt wird und wobei in einem zweiten Verfahrensschritt eine weitere Phasenverschiebung abhängig von der Phasenlage des Rastersignals, das bereits die erste Phasenverschiebung aufweist, gegenüber dem zweiten Bilddatensignal eingestellt wird. Eine weitere Phasenverschiebung ist dann erforderlich, wenn sich ergibt, daß bei Auslesen der Bilddaten aus dem zweiten Bildspeicher nach Maßgabe des die erste Phasenverschiebung aufweisenden Rastersignals eine Darstellung der zweiten Bildfolge in dem Gesamtbild nicht ohne Joint Line möglich ist.

Die Phasenlage des zweiten Bilddatensignals wird dabei insbesondere durch Auswerten eines Schreibzeigers zu Beginn einer Periode des Rastersignals ermittelt. Ergibt die Auswertung, daß eine zu Beginn der Periode des Rastersignals in den zweiten Bildspeicher eingeschriebene Zeile eines Bildes der zweiten Bildfolge zwischen einer ersten und zweiten kritischen Zeile liegt, so kann unter Umständen eine Darstellung dieser Bilddaten nicht ohne Joint Line erfolgen. Es ist daher eine weitere Phasenverschiebung des Rastersignals erforderlich, die gemäß der Phasenverschiebung des Rastersignals mit der ersten Phasenverschiebung gegenüber dem zweiten Bilddatensignal eingestellt wird.

Eine Darstellung der zweiten Bildfolge ist ohne Joint Line möglich, wenn die zu Beginn einer Periode der Rasterfolge in einen der beiden Halbbildspeicher eingeschriebene Zeile eines Bildes der zweiten Bildfolge oberhalb der ersten kritischen Zeile oder unterhalb der zweiten kritischen Zeile liegt. Dabei wird aus dem Halbbildspeicher ausgelesen, in den gerade geschrieben wird, wenn sich die Zeile oberhalb der ersten kritischen Zeile befindet, und es wird aus dem anderen Halbbildspeicher ausgelesen, wenn sich die Zeile unterhalb der zweiten kritischen Zeile befindet. Wird zu Beginn einer Periode des Rastersignals in keinen der Halbbildspeicher geschrieben, wird aus dem Halbbildspeicher ausgelesen, in den zuletzt geschrieben wurde.

Gegenstand der Erfindung ist des weiteren eine Vorrichtung zur gemeinsamen Darstellung wenigstens einer ersten und zweiten Bildfolge in einem Hauptbild gemäß der Ansprüche 11 bis 14.

Das erfindungsgemäße Verfahren und die erfindungsgemäße Vorrichtung werden nachfolgend anhand von Ausführungsbeispielen in Figuren näher erläutert. Es zeigen:

Figur 1: Zeilenindexdiagramm einer darzustellenden Bildfolge,

Figur 2: Zeilenindexdiagramme für das Schreiben und Lesen einer aus einer Folge erster und zweiter Halbbilder bestehenden ersten Bildfolge in zwei verschiedene Halbbildspeicher (Fig. 2a, b) und zeitlicher Verlauf eines Rasters zur Darstellung des Gesamtbilds (Fig. 2c),

Figur 3: Zeilenindexdiagramme für das Schreiben und Lesen einer aus einer Folge erster und zweiter Halbbilder bestehender zweiten Bildfolge in zwei verschiedene Halbbildspeicher (Fig. 3a, b) und zeitlicher Verlauf zweier verschiedener Raster zur Darstellung des Gesamtbilds,

Figur 4: Blockschaltbild einer erfindungsgemäßen Vorrichtung gemäß einer ersten Ausführungsform.

In den Figuren bezeichnen sofern nichts anderes angegeben ist, gleiche Bezugszeichen gleiche Signale bzw. Funktionseinheiten mit gleicher Bedeutung. Der Index M weist dabei auf Signale, die aus einer ersten Bildfolge abgeleitet wurden, und auf die zur Verarbeitung dieser Signale verwendeten Funktionseinheiten hin. Entsprechend weist der Index S auf Signale, die aus einer zweiten Bildfolge abgeleitet wurden, und auf die zur Verarbeitung dieser Signale verwendeten Funktionseinheiten hin.

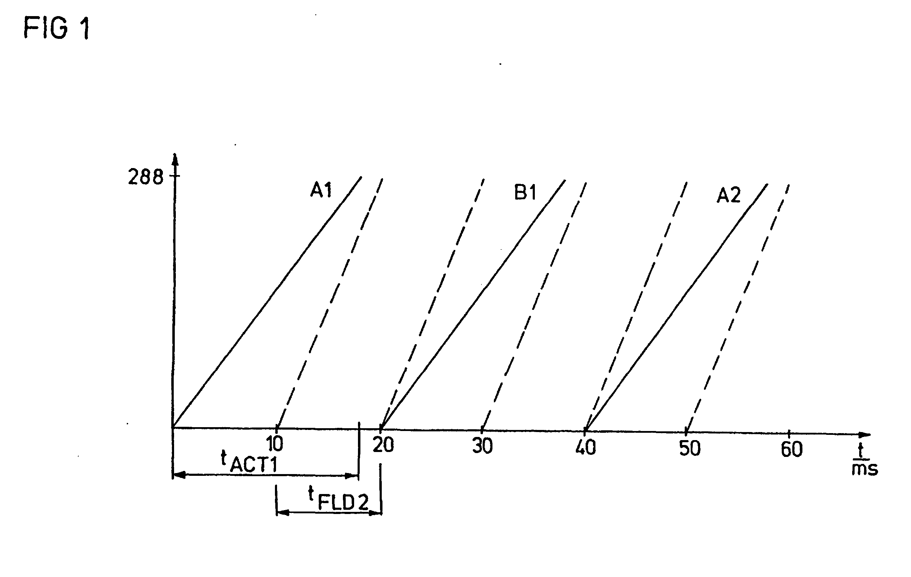

Für die Beschreibung wird im folgenden auf die Fig. 1 bis Bezug genommen.

Ziel des erfindungsgemäßen Verfahrens ist die Darstellung erster und zweiter, von zwei nicht synchronen Videoquellen gelieferten Bildfolgen M, S in einem Gesamtbild, wobei für die nachfolgende Beschreibung angenommen wird, daß die erste und zweite Bildfolge M, S gemäß dem PAL-Standard jeweils aus einer Folge von Halbbildern $A_M$, $B_M$, $A_S$, $B_S$ bestehen, die mit einer Frequenz von 50Hz zur Verfügung stehen. Die empfangenen Halbbilder sollen gemeinsam und als Maßnahme zur Flimmerbefreiung mit einer Wiedergabefrequenz von 100Hz auf dem Bildschirm dargestellt werden.

Zur Veranschaulichung zeigt Fig. 1 das Zeilenindexdiagramm einer aus einer Folge von ersten und zweiten Halbbildern A1, B1, A2,... bestehenden, von einer Videoquelle gelieferten Bildfolge, wie sie zusammen mit wenigstens einer weiteren, ebenfalls aus einer Folge von Halbbildern bestehenden Bildfolge nach dem erfindungsgemäßen Verfahren in einem Gesamtbild dargestellt werden soll. Die Halbbilder A1, B1, A2,... werden mit einer Frequenz von 50Hz zeilenweise zur Verfügung gestellt, wobei jedes Halbbild in dem dargestellten Ausführungsbeispiel 288 Zeilen umfaßt. Die durchgezogenen über der Zeit ansteigenden Schreibzeiger in Fig. 1 geben den zeitlichen Verlauf wieder, in dem die Zeilen der Halbbilder zur Verfügung gestellt werden und in einen Bildspeicher eingeschrieben werden können. Die zum Aufbau eines Halbbildes benötigte Zeitdauer $t_{ACT1}$ beträgt beim PAL-Standard 18,43 ms und ergibt sich aus dem Produkt der Zeilenzahl (288) und der zur Abtastung einer Zeile benötigten Zeitdauer (64μs).

Bei bekannten Verfahren zur flimmerfreien Darstellung einer mit einer Halbbildfrequenz von 50Hz vorliegenden Bildfolge werden die Halbbilder in einen Bildspeicher eingelesen wobei jedes Halbbild zweimal unmittelbar aufeinanderfolgend aus dem Bildspeicher ausgelesen und am Bildschirm dargestellt wird. Die Halbbilder werden dabei in verschiedenen Rastern am Bildschirm dargestellt, wobei die ersten Halbbilder A1, A2,... in dem die ungeradzahligen Zeilen des Bildschirm umfassenden, sogenannten α-Raster und die zweiten Halbbilder B1,... in dem die geradzahligen Zeilen des Bildschirms umfassenden, sogenannten β-Raster dargestellt werden.

Zur Veranschaulichung ist in Fig. 1 der zeitliche Verlauf des Auslesens der Bilddaten aus dem Bildspeicher in Form von Lesezeigern gestrichelt eingezeichnet. Hieraus wird deutlich, daß nach Empfang und Einlesen eines Halbbildes A1, B1, A2,... dieses Halbbild zweimal nacheinander ausgelesen wird, wobei der Auslesevorgang mit einer Frequenz von 100Hz erfolgt, so daß zum Auslesen eines Halbbildes für das dargestellte Ausführungsbeispiel eine Zeitdauer $t_{FLD2}$=10 ms zur Verfügung stehen. Wichtig ist hierbei, daß während des zweimaligen Auslesens nur solche Bilddaten ausgelesen werden, die während desselben Schreibvorgangs in den Bildspeicher geschrieben wurden. Ist dies nicht der Fall, werden also während eines Auslesevorgangs Bilddaten ausgelesen und am Bildschirm dargestellt, die zu verschiedenen Halbbildern gehören, tritt insbesondere bei bewegten Bildern ein für den Betrachter störender Versatz, eine sogenannte Joint Line auf. Das Auftreten derartiger Joint Lines ist aus dem Zeilendindexdiagramm ersichtlich, wenn sich die Schreibzeiger und Lesezeiger schneiden.

Derartige Probleme ergeben sich insbesondere dann, wenn das empfangene Bild verkleinert, also mit einer um einen Dezimierungsfaktor dezimierten Zeilenzahl am Bildschirm dargestellt werden soll.

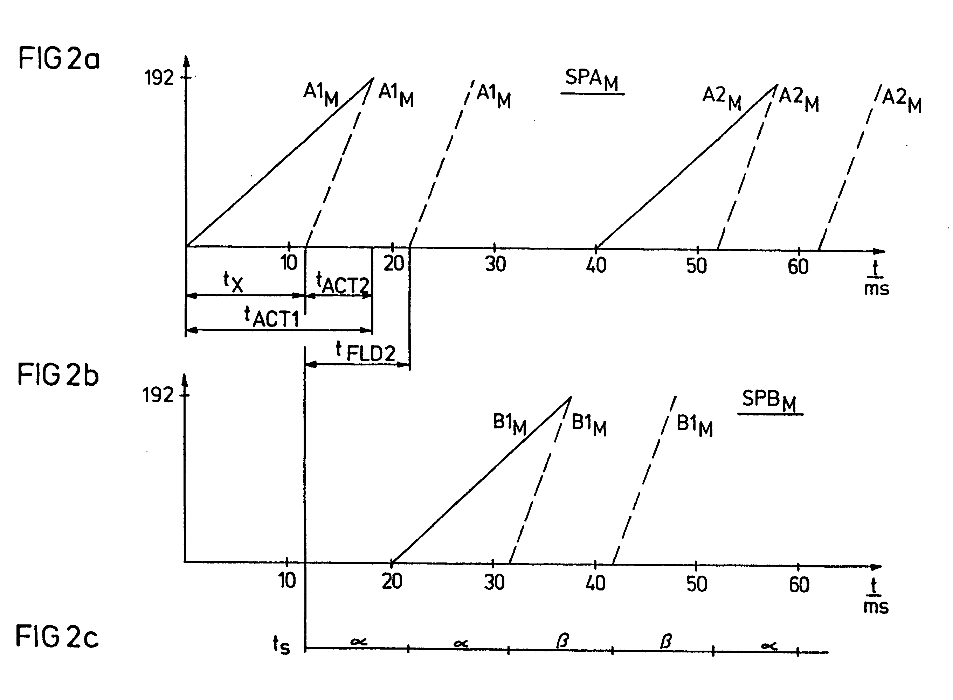

Das erfindungsgemäße Verfahren sieht vor, die zu ersten Halbbildern $A1_M$, $A2_M$,... einer ersten Bildfolge gehörenden Bilddaten in einem ersten Bilddatenspeicher $SPA_M$ und die zu zweiten Halbbildern $B1_M$ der ersten Bildfolge gehörenden Bilddaten in einem zweiten Bilddatenspeicher $SPB_M$ zu speichern. Fig. 2a zeigt den zeitlichen Verlauf des Schreib- und Lesevorgangs für den ersten Halbbildspeicher $SPA_M$ , Fig. 2b den Schreib - und Lesevorgang für den zweiten Halbbildspeicher $SPB_M$. Die durchgezogenen Linien repräsentieren dabei Schreibzeiger, die gestrichelten Linien Lesezeiger. Die abzuspeichernden Halbbilder $A1_M$, $B1_M$, $A2_M$,... sind für das dargestellte Ausführungsbeispiel gegenüber den von einer ersten Videoquelle empfangenen Halbbildern um einen Dezimierungsfaktor $DF_M$=1,5 dezimiert und weisen jeweils 192 Zeilen auf.

Das Auslesen der Bilddaten aus den Halbbildspeichern $SPA_M$, $SPB_M$ erfolgt nach Maßgabe eines Rastersignals, welches den Beginn der Auslesevorgänge steuert. Zur Vermeidung von Joint Lines beginnt das frühestmögliche Auslesen der Bildinformationen zeitlich verschoben gegenüber dem Einschreiben der Bildinformationen. Die zeitliche Verschiebung beträgt $t_x = t_{ACT1} - t_{ACT2}$, wobei sich die zum Auslesen der Bildinformationen aus dem Halbbildspeicher zur Verfügung stehende Zeitdauer $t_{ACT2}$ aus der Zeitdauer $t_{ACT1}$ und dem Dezimierungsfaktor $DF_M$ gemäß $t_{ACT2} = t_{ACT1}/(2 \cdot DF_M)$ ergibt. Der Auslesevorgang wiederholt sich in Zeitabständen $t_{FLD2}$, wobei abwechselnd jeweils zweimal unmittelbar aufeinanderfolgend Bilddaten aus dem ersten Halbbildspeicher $SPA_M$ und dem zweiten Halbbildspeicher $SPB_M$ ausgelesen werden. Die Darstellung der Bilddaten aus dem ersten Halbbildspeicher erfolgt dabei im α-Raster, die Darstellung der Bilddaten aus dem zweiten Halbbildspeicher erfolgt im β-Raster, wie in Fig. 2c durch den zeitlichen Verlauf der Rasterabfolge ααββ dargestellt ist.

Die in Fig. 2c dargestellte Rasterabfolge macht deutlich, in welchen Zeiträumen das α-Raster und in welchen Zeiträumen das β-Raster des Gesamtbildes beschrieben wird. Während einer Rasterphase wird der Bildschirm des Gesamtbilds einmal von oben nach unten zeilenweise abgetastet. Das Auslesen der Halbbildspeicher $SPA_M$, $SPB_M$ zu Beginn der Rasterphasen, wie dies in Fig. 2 dargestellt ist, bedeutet, daß die erste Bildfolge im oberen Bildschirmbereich dargestellt wird. Soll die Darstellung des dezimierten Bildes im unteren Bildschirmbereich erfolgen, werden die Halbbildspeicher SPA$_M$, SPB$_M$ zu späteren Zeitpunkten während der Rasterphasen ausgelesen. Die in Fig. 2 eingezeichneten Lesezeiger sind dann zeitlich nach rechts verschoben. Dieses spätere Auslesen ist unkritisch hinsichtlich der Entstehung von Joint Lines. Die Phasenverschiebung t$_x$ des in die Halbbildspeicher eingeschriebenen Bilddatensignals gegenüber dem Rastersignal bzw. dem Darstellungsraster ist vorzugsweise so gewählt, daß die erste Bildfolge ohne Joint Line dargestellt werden kann, wenn die Halbbildspeicher SPA$_M$, SPB$_M$ zu Beginn der $\alpha$-Phase bzw. $\beta$-Phase ausgelesen werden, wie in Fig. 2 dargestellt ist. Das Bild kann dann an einer beliebigen Position des Bildschirms ohne Joint Line dargestellt werden. Der tatsächliche Auslesezeitpunkt innerhalb des Rasters wird durch ein Positionssignal vorgegeben.

Die Einstellung der Phasenverschiebung t$_x$ zwischen dem den Auslesevorgang steuernden Rastersignal bzw. dem Darstellungsraster und einem die Bildinformationen enthaltenden Bilddatensignal abhängig von dem Dezimierungsfaktor DF$_M$ und das Abspeichern der ersten und zweiten Halbbilder in verschiedenen Halbbildspeichern ermöglicht eine Darstellung der beliebig verkleinerten ersten Bildfolge in dem Gesamtbild ohne Joint Line. Die beschriebene Einstellung der Phasenverschiebung bzw. des frühestmöglichen Zeitpunkts für den Auslesevorgang ist so gewählt, daß das dezimierte Bild an einer beliebigen Bildschirmposition ohne Joint Line dargestellt werden kann. Der in Fig. 2 dargestellte Verlauf des Auslesesvorgangs geht dabei von dem "worst case" aus, in dem das dezimierte Bild im oberen Bildschirmbereich dargestellt werden soll.

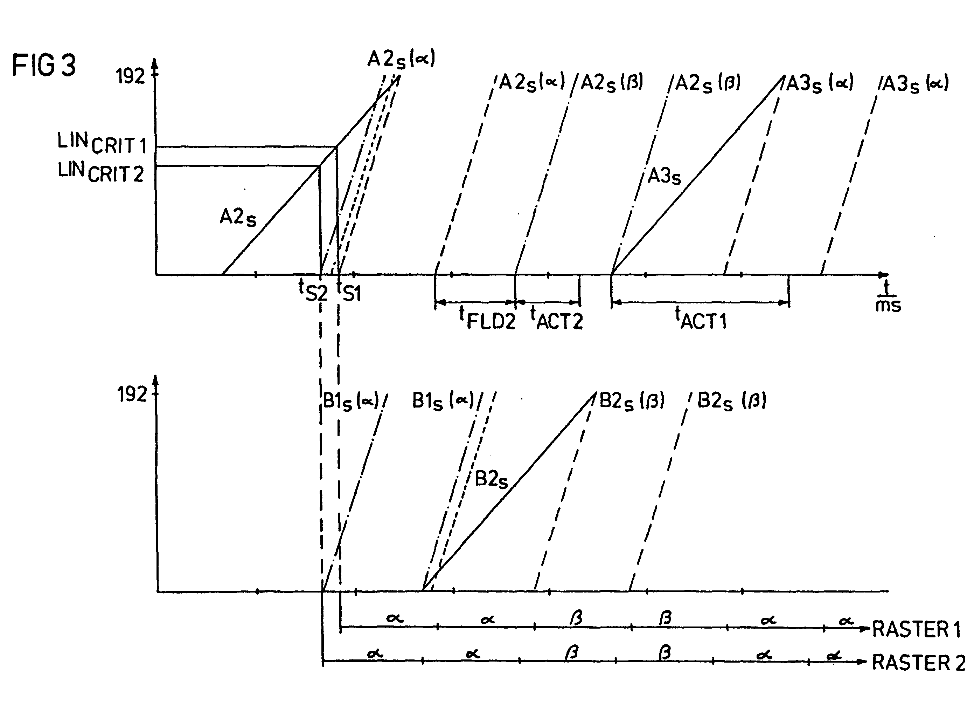

Das erfindungsgemäße Verfahren sieht des weiteren vor, Bilddaten der zweiten Bildfolge in Form eines Bilddatensignals in einem zweiten Bildspeicher abzuspeichern, wobei Bilddaten erster Halbbilder in einem ersten Halbbildspeicher SPA$_S$ und Bilddaten zweiter Halbbilder in einem zweiten Halbbildspeicher SPB$_S$ dieses zweiten Bildspeichers abgespeichert werden. In Fig. 3 sind mittels durchgezogener Linien die Schreibzeiger für das Einschreiben der Bilddaten einer Folge erster Halbbilder A2$_S$, A3$_S$,... in den ersten Halbbildspeicher SPA$_S$ und der Bilddaten einer Folge zweiter Halbbilder B2$_S$,... in den zweiten Halbbildspeicher SPB$_S$ veranschaulicht, wobei für dieses Ausführungsbeispiel angenommen ist, daß die Halbbilder ebenfalls auf 192 Zeilen dezimiert sind.

Die gemeinsame Darstellung der ersten und zweiten Bildfolge in einem Gesamtbild erfordert, daß die Bilddaten der Halbbilder A1$_M$, B1$_M$, A2$_M$, ... und A2$_S$, B2$_S$, A3$_S$, ... synchron nach Maßgabe des Rastersignals aus den jeweiligen Halbbildspeichern SPA$_M$, SPB$_M$, SPA$_S$, SPB$_S$ ausgelesen werden, wobei für das Rastersignal nach dem erfindungsgemäßen Verfahren zunächst, wie in Fig. 2 veranschaulicht, eine erste Phasenverschiebung t$_x$ eingestellt wurde, so daß eine Darstellung der ersten Bildfolge in dem Gesamtbild ohne Joint Line möglich ist. Zur Steuerung des Auslesevorgangs der Bilddaten der Halbbilder der zweiten Bildfolge sieht das erfindungsgemäße Verfahren vor, zunächst eine Phasenverschiebung zwischen dem zweiten Bilddatensignal und dem mittels der ersten Phasenverschiebung an die erste Bildfolge angepaßten Rastersignals bzw. des Darstellungsrasters zu bestimmen.

Die Auswertung der Phasenverschiebung zwischen dem zweiten Bilddatensignal und dem Rastersignal erfolgt vorzugsweise durch Auswerten der Position eines Schreibzeigers des zweiten Bildspeichers zu Beginn einer Periode des Rastersignals bzw. zu Beginn einer Rasterphase. Figur 3 zeigt den zeitlichen Verlauf zweier verschiedener Darstellungsrasters RASTER1 und RASTER2, deren Perioden bzw. erste $\alpha$-Phasen zu Zeitpunkten t$_{S1}$ und t$_{S2}$ beginnen. Der Schreibzeiger des ersten Halbbildspeichers SPA$_S$ befindet sich zum Zeitpunkt t$_{S1}$ bei einer ersten kritischen Zeile LIN$_{CRIT1}$ und zum Zeitpunkt t$_{S2}$ bei einer zweiten kritischen Zeile LIN$_{CRIT2}$. Die nach Maßgabe des ersten Darstellungsrasters RASTER1 erfolgenden Auslesevorgänge sind in Fig. 3 durch gestrichelte Linien, die nach Maßgabe des zweiten Darstellungsrasters RASTER2 erfolgenden Auslesevorgänge sind durch strichpunktierte Linien veranschaulicht.

Fig. 3 zeigt, daß bei Auslesevorgängen, die zu Zeitpunkten später als t$_{S1}$, jedoch noch bevor ein neuer Schreibvorgang erfolgt, beginnen, eine Darstellung der in dem ersten Halbbildspeicher SPA$_S$ abgespeicherten Halbbilder im $\alpha$-Raster und der in dem zweiten Halbbildspeicher SPB$_S$ abgespeicherten Halbbilder im $\beta$-Raster ohne Joint Line möglich ist. Das erfindungsgemäße Verfahren sieht allgemein vor, die Bilddaten aus dem Halbbildspeicher für die Darstellung auszulesen, in den gerade geschrieben wird, wenn sich der Schreibzeiger zu Beginn einer Periode des Rastersignals und damit zu Beginn der Darstellung des Gesamtbildes oberhalb der ersten kritischen Zeile LIN$_{CRIT1}$ befindet. Für das in Fig. 3 dargestellte Ausführungsbeispiel bedeutet dies, daß die Halbbilder A2$_S$, A3$_S$, ... bei Vorliegen des Darstellungsrasters RASTER1 im $\alpha$-Raster und die Halbbilder B2$_S$, ... im $\beta$-Raster dargestellt werden. Würden zu Beginn einer Periode des Rastersignals bzw. des Darstellungsrasters der zweite Halbbildspeicher SPB$_S$ beschrieben und sich der Schreibzeiger oberhalb der ersten kritischen Zeile LIN$_{CRIT1}$ befinden, würden die Halbbilder A$_M$ im $\beta$-Raster und die Halbbilder B$_M$ im $\alpha$-Raster dargestellt werden.

Bei Auslesevorgängen, die zwischen dem Beginn des Einschreibens in den ersten Halbbildspeicher und dem Zeitpunkt t$_{S2}$ beginnen, ist eine Darstellung der in dem ersten Halbbildspeicher abgespeicherten Halbbilder im $\alpha$-Raster nicht ohne Joint Line möglich, da der Auslesevorgang den Einschreibevorgang überholen würde, wie die Schnittpunkte des gestrichelten Lesezeigers A2$_S$($\alpha$) mit dem Schreibzeiger A2$_S$ zeigen. Das erfindungsgemäße Verfahren sieht für den in Fig. 3 dargestellten Fall vor, die Halbbilder im $\alpha$-Raster aus dem zweiten Halbbildspeicher auszulesen. Das erfindungsgemäße Verfahren sieht allgemein vor, die Bilddaten aus dem Halbbildspeicher für die Darstellung auszulesen, in den gerade nicht geschrieben wird, wenn sich der Schreibzeiger zu Beginn einer Periode des Rastersignals und damit zu Beginn der Darstellung des Gesamtbildes unterhalb der zweiten kritischen Zeile $\text{LIN}_{\text{CRIT2}}$ befindet. Für das in Fig. 3 dargestellte Ausführungsbeispiel bedeutet dies, daß die Halbbilder $\text{A2}_S$, $\text{A3}_S$,... bei Vorliegen das Darstellungsrasters RASTER2 im β-Raster und die Halbbilder $\text{B2}_S$,... im α-Raster dargestellt werden. In diesem Fall muß für die A-Halbbilder eine Korrektur der Bildfolge um eine Zeile durchgeführt werden.

Beginnt der Auslesevorgang zwischen den Zeitpunkten $t_{S1}$ und $t_{S2}$ und befindet sich der Schreibzeiger damit zwischen der ersten und zweiten kritischen Zeile, wie dies in Fig. 3 durch die gepunktete Linie angedeutet ist, ist weder durch Auslesen der Halbbilder $\text{A2}_S$, $\text{A3}_S$, ... während des α-Rasters noch während des β-Rasters eine Darstellung ohne Joint Line möglich, wie die Schnittpunkte der gepunkteten Lesezeiger mit den Schreibzeigern $\text{A2}_S$, $\text{B2}_S$ zeigen. Das erfindungsgemäße Verfahren sieht daher vor, eine zweite Phasenverschiebung des Rastersignals bzw. des Darstellungsrasters vorzunehmen, wenn sich der Schreibzeiger des zweiten Bildspeichers zu Beginn des mittels der ersten Phasenverschiebung an die erste Bildfolge angepaßten Rstersignals zwischen der ersten und zweiten kritischen Zeile $\text{LIN}_{\text{CRIT1}}$ und $\text{LIN}_{\text{CRIT2}}$ befindet. Die zweite Phasenverschiebung erfolgt derart, daß eine Periode des neuen Rastersignals später als der in Fig. 3 dargestellte Zeitpunkt $t_{S1}$ beginnt.

Wird zu Beginn einer Periode des Rastersignals in keinen der Halbbildspeicher geschrieben, sieht das erfindungsgemäße Verfahren vor, aus dem Halbbildspeicher auszulesen, in den zuletzt geschrieben wurde.

Der Wert der ersten kritischen Zeile $\text{LIN}_{\text{CRIT1}}$ berechnet sich aus der zum Einschreiben eines Halbbildes erforderlichen Zeitdauer $t_{\text{ACT1}}$, der zum Auslesen des Halbbildes zur Verfügung stehenden Zeitdauer $t_{\text{ACT2}}$ und der Zeilenanzahl n des dezimierten Bildes (im vorliegenden Fall 192) wie folgt: $\text{LIN}_{\text{CRIT1}} = (t_{\text{ACT1}} - t_{\text{ACT2}}) \cdot n/t_{\text{ACT1}}$, wobei sich $t_{\text{ACT2}}$ gemäß $t_{\text{ACT1}}/(2 \cdot DF_S)$ berechnet und wobei $DF_S$ der Dezimierungsfaktor zur Dezimierung der zweiten Bildfolge ist, der jedoch für das beschriebene Ausführungsbeispiel mit $DF_M$ übereinstimmt.

Der Wert der zweiten kritischen Zeile $\text{LIN}_{\text{CRIT2}}$ berechnet sich aus dem zeitlichen Abstand zweier Auslesevorgänge $t_{\text{FLD2}}$ und der Zeilenzahl n wie folgt: $\text{LIN}_{\text{CRIT2}} = t_{\text{FLD2}} \cdot n/t_{\text{ACT1}}$. Die maximal erforderliche weitere Phasenverschiebung des Rastersignals ist gegeben durch die Differenz $t_{\text{ACT1}} - t_{\text{ACT2}} - t_{\text{FLD2}}$.

Bei dem erfindungsgemäßen Verfahren wird somit das Darstellungsraster zunächst an die erste Bildfolge M durch eine Phasenverschiebung derart angepaßt, daß die Bildfolge im Gesamtbild an einer beliebigen Position ohne Joint Line dargestellt werden kann, wobei Halbbilder $A_M$ dieser Bildfolge immer im α-Raster dargestellt werden. Eine Darstellung der Halbbilder der zweiten Bildfolge S erfolgt dann abhängig von der Phasenverschiebung zwischen dem Rastersignal bzw. dem Darstellungsraster und der zweiten Bildfolge bzw. dem zweiten Bilddatensignal. Die Halbbilder $A_S$ der zweiten Bildfolge werden dabei abhängig von der ermittelten Phasenverschiebung im α-Raster oder im β-Raster dargestellt. Eine zusätzliche Phasenverschiebung des Rastersignals wird dann vorgenommen, wenn eine Darstellung der zweiten Bildfolge nach Maßgabe des Rastersignals mit der ersten Phasenverschiebung nicht ohne Joint Line erfolgen kann. Dies ist dann der Fall, wenn sich der Schreibzeiger des zweiten Bildspeichers zu Beginn einer Periode des Rastersignals zwischen einer ersten und zweiten kritischen Zeile $\text{LIN}_{\text{CRIT1}}$, $\text{LIN}_{\text{CRIT2}}$ befindet.

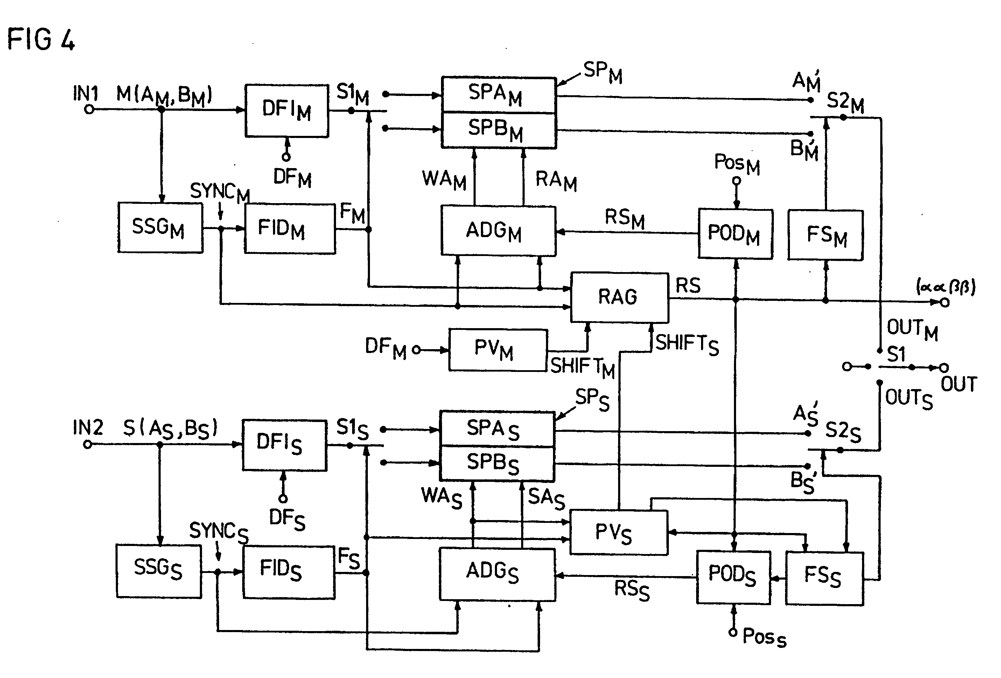

Fig. 4 zeigt ein Blockschaltbild einer erfindungsgemäßen Vorrichtung zur Durchführung des erfindungsgemäßen Verfahrens. Eingängen IN1, IN2 der Vorrichtung sind eine erste und zweite Bildfolgen M, S, die jeweils aus ersten und zweiten Halbbildfolgen AM, $B_M$, $A_S$, $B_S$ bestehen, zuführbar. Die vorrichtung ist zweikanalig aufgebaut, wobei jeder Kanal die gleichen Mittel zur Eingangssignalverarbeitung aufweist.

Den Eingängen IN1, IN2 sind jeweils Dezimierungsfilter $DFI_M$; $DFI_S$ nachgeschaltet, die zur Dezimierung der Halbbilder $A_M$, $B_M$, $A_S$, $B_S$ jeweils um einen frei wählbaren Dezimierungsfaktor $DF_M$, $DF_S$ dienen. Den Dezimierungsfiltern $DFI_M$; $DFI_S$ sind Bildspeicher $SP_M$, $SP_S$ zur Speicherung der Bilddaten nachgeschaltet, wobei jeder Bildspeicher $SP_M$, $SP_S$ einen ersten und zweiten Halbbildspeicher $SPA_M$, $SPB_M$, $SPA_S$, $SPB_S$ aufweist und in jedem der Halbbildspeicher $SPA_M$, $SPB_M$, $SPA_S$, $SPB_S$ die Bilddaten jeweils einer Folge von Halbbildern $A_M$, $B_M$, $A_S$, $B_S$ gespeichert werden. Die Halbbildspeicher $SPA_M$, $SPB_M$, $SPA_S$, $SPB_S$ sind dabei so dimensioniert, daß bei minimalem Dezimierungsfaktor $DF_M$, $DF_S$ ein Halbbild gespeichert werden kann.

Zur Umschaltung zwischen den Halbbildspeichern $SPA_M$, $SPB_M$, $SPA_S$, $SPB_S$ dient jeweils ein Schalter $S1_M$, $S1_S$, der nach Maßgabe eines Halbbildsignals $F_M$, $F_S$ umschaltbar ist. Ein Synchronsignalgenerator $SSG_M$, $SSG_S$ erzeugt aus den empfangenen Bildfolgen M, S Synchronsignale $SYNC_M$, $SYNC_S$, die Informationen über den zeitlichen Verlauf der empfangenen Halbbilder $A_M$, $B_M$, $A_S$, $B_S$ und Informationen darüber, ob es sich bei dem empfangenen Halbbild um ein erstes oder zweites Halbbild handelt, enthalten. Ein Halbbildidentifizierer $FID_M$; $FID_S$ erzeugt aus dem Synchronsignal $SYNC_M$, $SYNC_S$ das Halbbildsignal zur Ansteuerung des Schalters $S1_M$, $S1_S$. Die Synchronsignale steuern weiterhin das Einschreiben der Bilddaten in die Bildspeicher $SP_M$, $SP_S$. Sie werden hierzu Adreßgeneratoren $ADG_M$, $ADG_S$ zugeführt, die Schreibadressen $WA_M$, $WA_S$ zum Einschreiben der Bilddaten in die Bildspeicher $SP_M$, $SP_S$ erzeugen.

Die Vorrichtung weist des weiteren einen Rastergenerator RAG auf, der nach Maßgabe des aus der ersten Bildfolge erzeugten Synchronsignals $SYNC_M$, dem Halbbildsignal $F_M$ und einer Phasenverschiebung $SHIFT_M$ ein Rastersignal RS erzeugt. Die Phasenverschiebung $SHIFT_M$ wird von einem Mittel $PV_M$ zur Berechnung einer Phasenverschiebung $PV_M$ abhängig von dem Dezimierungsfaktor $DF_M$ berechnet. Das Rastersignal RS dient zur Erzeugung

eines Darstellungsrasters $\alpha\alpha\beta\beta$ in dem die in den Halbbildspeichern $SPA_M$, $SPB_M$, $SPA_S$, $SPB_S$ abgespeicherten dezimierten Halbbilder gemeinsam auf dem Bildschirm dargestellt werden. Das Rastersignal RS steuert gemeinsam mit Positionssignalen $POS_M$, $POS_S$ das Auslesen der Halbbilder aus den Halbbiidspeichern $SPA_M$, $SPB_M$, $SPA_S$, $SPB_S$. Das Rastersignal RS und die Positionssignale $POS_M$, $POS_S$ sind hierzu jeweils Positionsdekodern $POD_M$, $POD_S$ zugeführt, die abhängig von diesen Signalen Signale für den Lesestart $RS_M$, $RS_S$ erzeugen, die den Adreßgeneratoren $ADG_M$, $ADG_S$ zugeführt sind.

Der Rastergenerator RAG weist einen Rückkopplungszweig mit einem zweiten Mittel $PV_S$ zur Berechnung einer Phasenverschiebung auf. Dem zweiten Mittel $PV_S$ ist das Rastersignal RS, das Schreibsignal $WA_S$ und das Halbbildsignal $F_S$ des zweiten Kanals zugeführt. Abhängig von diesen Signalen bestimmt das zweite Mittel eine weitere Phasenverschiebung $SHIFT_S$ des Rastersignals, die gegebenenfalls erforderlich ist, um wie oben erläutert eine Darstellung der zweiten Bildfolge ohne Joint Line zu ermöglichen. Befindet sich der Schreibzeiger zu Beginn einer Periode des Rastersignals zwischen einer ersten und zweiten kritischen Zeile ist eine weitere Phasenverschiebung erforderlich, um eine Darstellung der zweiten Bildfolge ohne Joint Line zu ermöglichen. Das Mittel $PV_S$ berechnet diese weitere Phasenverschiebung $SHIFT_S$, um die das Rastersignal zusätzlich zu der ersten Phasenverschiebung $SHIFT_M$ verschoben wird.

Die dargestellte Vorrichtung ermöglicht insbesondere eine schrittweise Einstellung der Phasenverschiebung des Rastersignals RS, indem zunächst die erste Phasenverschiebung $SHIFT_M$ abhängig von dem ersten Dezimierungsfaktor $DF_M$ so eingestellt wird, daß eine Darstellung der ersten Bildfolge M ohne Joint Line möglich ist. Dann wird überprüft, ob eine weitere Phasenverschiebung $SHIFT_S$ erforderlich ist, um auch die zweite Bildfolge ohne Joint Line darstellen zu können. Zu Beginn des Verfahrens, wenn die Phasenverschiebung des Rastersignals RS noch nicht korrekt eingestellt ist, können sowohl bei der ersten als auch bei der zweiten Bildfolge M, S eine Joint Line auftreten. Die Einstellung der Phasenverschiebung erfolgt vorzugsweise in mehreren Schritten, damit die Elektronenstrahl-Ablenkeinheit der Veränderung der Vertikal-Ablenkfrequenz für den Betrachter unsichtbar folgen kann.

Bei Empfang der Lesestartsignale $RS_M$, $RS_S$ erzeugen die Adreßgeneratoren $ADG_M$, $ADG_S$ Leseadressen $RA_M$, $RA_S$ in Abhängigkeit derer die beiden Halbbildspeicher $SPA_M$, $SPB_M$ und $SPA_S$, $SPB_S$ jedes Bildspeichers $SP_M$, $SP_S$ ausgelesen werden. Welche der ausgelesenen Halbbilder $A_M{}'$, $B_M{}'$, $A_S{}'$, $B_S{}'$ an Ausgänge $OUT_M$, $OUT_S$ der beiden Kanäle gegeben werden wird bestimmt durch die Schalterstellung zweier Schalter $S2_M$, $S2_S$, die nach Maßgabe von Mitteln $FS_M$, $FS_S$ zur Halbbildauswahl umgeschaltet werden. Dem ersten Mittel $FS_M$ ist hierzu das Rastersignal RS zugeführt, wobei das Mittel $FS_M$ den Schalter $S2_M$ so einstellt, daß im $\alpha$-Raster des Gesamtbildes stets erste Halbbilder $A_M$ und im $\beta$-Raster stets zweite Halbbilder $B_M$ der ersten Bildfolge M dargestellt werden.

Dem Mittel $FS_S$ zur Einstellung des Schalters $S2_S$ ist neben dem Rastersignal RS ein Signal des Mittels $PV_S$ zur Berechnung der zweiten Phasenverschiebung zugeführt. Die Einstellung des Schalters $S2_S$ erfolgt dabei derart, daß das Halbbild aus dem Halbbildspeicher an den Ausgang $OUT_S$ gegeben wird, in den gerade geschrieben wird, wenn sich der Schreibzeiger zu Beginn einer Periode des Rastersignals oberhalb einer ersten kritischen Zeile befindet, daß das Halbbild aus dem Halbbildspeicher an den Ausgang $OUT_S$ gegeben wird, in den gerade nicht geschrieben wird, wenn sich der Schreibzeiger zu Beginn einer Periode des Rastersignals unterhalb einer ersten kritischen Zeile befindet. Wird zu Beginn einer Periode des Rastersignals in keinen der Halbbildspeicher $SPA_M$, $SPB_M$, $SPA_S$, $SPB_S$ geschrieben, wird der Schalter $S2_S$, derart eingestellt, daß aus dem Halbbildspeicher ausgelesen wird, in den zuletzt geschrieben wurde.

Bei der Darstellung der zweiten Bildfolge kann es vorkommen, daß erste Halbbilder $A_S$ im $\beta$-Raster und damit zweite Halbbilder $B_S$ im $\alpha$-Raster dargestellt werden. Um eine korrekte Verschachtelung beider Halbbilder $A_S$, $B_S$ zu gewährleisten, muß eine Verschiebung der Halbbilder $A_S$ um eine Zeile nach oben stattfinden. Dies wird dadurch erreicht, daß das Lesestartsignal $RS_S$ in diesem Fall eine Zeile früher durch den Positionsdetektor $POD_S$ erzeugt wird. Das zweite Mittel $FS_S$ ist hierzu an den Positionsdetektor $POD_S$ angeschlossen.

Das Rastersignal RS wird mittels des erfindungsgemäßen Verfahrens und mittels der erfindungsgemäßen Vorrichtung so gewählt, daß eine Darstellung der beiden Bildfolgen an jeder Bildschirmposition ohne Joint Line möglich ist. An welcher Position des Bildschirms die Darstellung erfolgt ist abhängig von den Positionssignalen $POS_M$, $POS_S$ die zusammen mit dem Rastersignal RS den Beginn des Auslesens der Halbbildspeicher $SPA_M$, $SPB_M$, $SPA_S$, $SPB_S$ und damit die Darstellung der Halbbilder innerhalb des Rasters bestimmen.

Zwischen den an die Ausgänge $OUT_M$, $OUT_S$ der erfindungsgemäßen Vorrichtung gegebenen Halbbildern wird mittels eines weiteren Schalters S1 umgeschaltet. Die Umschaltung erfolgt abhängig von der Position der darzustellenden Bildfolgen auf dem Bildschirm. Sollen die Bildfolgen beispielsweise gleich groß nebeneinander dargestellt werden, wird der Schalter S1 jeweils für die Dauer einer halben Zeile den Ausgang $OUT_M$ mit dem Ausgang OUT und für die Dauer einer halben Zeile den Ausgang $OUT_S$ mit dem Ausgang OUT verbinden. Sollen zusätzlich Ränder dargestellt werden, besteht die Möglichkeit ein Signal B zur Darstellung von Randwerten an den Ausgang OUT zu geben. Auf die Darstellung einer Ansteuerschaltung für den Schalter S1 ist in Figur 4 aus Gründen der Übersichtlichkeit verzichtet.

Das erfindungsgemäße Verfahren erlaubt eine beliebige Skalierung und Positionierung einer ersten und zweiten Bildfolge M, S bei gemeinsamer Darstellung, insbesondere eine Darstellung der Bildfolgen nebeneinander, untereinander oder eine Bildin-Bild-Darstellung.

Die erfindungsgemäße Vorrichtung ist des weiteren geeignet, eine herkömmliche AABB-Wandlung der Bildfolge M durchzuführen, wenn keine zweite Bildfolge S an den Eingang IN2 angelegt wird und der Dezimierungsfaktor $DF_M$=1 ist.

**Patentansprüche**

1. Verfahren zur Darstellung von wenigstens einer ersten und zweiten Bildfolge (M; S) in einem Gesamtbild, wobei das Verfahren die folgenden Merkmale aufweist:

- Abspeichern von zu einem Bild der ersten Bildfolge (M) gehörenden Bilddaten in Form eines ersten Bilddatensignals in einem ersten Bildspeicher ($SP_M$) und Abspeichern von zu einem Bild der zweite Bildfolge (S) gehörenden Bilddaten in Form eines zweiten Bilddatensignals in einem zweiten Bildspeicher ($SP_S$),

wobei die erste und die zweite Bildfolge (M; S) jeweils aus einer Folge von Halbbildern ($A_M$, $B_M$; $A_S$, $B_S$) bestehen und Bilddaten erster Halbbilder ($A_M$; $A_S$) jeweils in einem ersten Halbbildspeicher ($SPA_M$; $SPA_S$) und Bilddaten zweiter Halbbilder ($B_M$; $B_S$) jeweils in einem zweiten Halbbildspeicher ($SPB_M$; $SPB_S$) der Bildspeicher ($SP_M$; $SP_S$) abgespeichert werden;

- Auslesen der Bilddaten aus dem ersten und zweiten Bildspeicher ($SP_M$; $SP_S$) derart, dass eine Darstellung des Gesamtbildes in einem ersten und zweiten Zeilenraster ($\alpha$, $\beta$) erfolgt, die jeweils unmittelbar aufeinanderfolgend wiederholt werden, wobei das Auslesen der Bilddaten bezüglich der Bilddatensignale gemäß einem periodischen Rastersignal (RS) phasenverschoben ($SHIFT_M$; $SHIFT_S$; $t_x$) durchgeführt wird,

**dadurch gekennzeichnet,**
**dass** die erste und die zweite Bildfolge (M; S) in dem Gesamtbild entsprechend einem ersten Dezimierungsfaktor ($DF_M$) bzw. einem zweiten Dezimierungsfaktor ($DF_S$) dezimiert dargestellt werden; und
**dass** die Phasenverschiebung ($SHIFT_M$; $SHIFT_S$; $t_x$) des Rastersignals (RS) abhängig von dem ersten und zweiten Bilddatensignal und von dem ersten und zweiten Dezimierungsfaktor ($DF_M$; $DF_S$) eingestellt wird.

2. Verfahren nach Anspruch 1,
**dadurch gekennzeichnet,**
**dass** die ersten und zweiten Bilddatensignale vor dem Abspeichern in die jeweiligen Bildspeicher ($SP_M$; $SP_S$) um den ersten bzw. zweiten Dezimierungsfaktor ($DF_M$; $DF_S$) dezimiert werden.

3. Verfahren nach Anspruch 1 oder 2,
**dadurch gekennzeichnet,**
**dass** die Einstellung der Phasenverschiebung ($SHIFT_M$; $SHIFT_S$; $t_x$) des Rastersignals (RS) schrittweise erfolgt, wobei eine erste Phasenverschiebung ($SHIFT_M$; $t_x$) abhängig von dem ersten Bilddatensignal und dem ersten Dezimierungsfaktor ($DF_M$) und eine weitere Phasenverschiebung ($SHIFT_S$) abhängig von der Phasenlage des zweiten Bilddatensignals gegenüber dem Rastersignal (RS) mit der ersten Phasenverschiebung ($SHIFT_M$; $t_x$) und von dem zweiten Dezimierungsfaktor ($DF_S$) eingestellt wird.

4. Verfahren nach Anspruch 3,
**dadurch gekennzeichnet,**
**dass** die Bilddaten der zweiten Bildfolge (S) zeilenweise in dem zweiten Bildspeicher ($SP_s$) abgespeichert werden; und
**dass** die Phasenlage des zweiten Bilddatensignals gegenüber dem Rastersignal (RS) mit der ersten Phasenverschiebung ($SHIFT_M$; $t_x$) anhand der zu Beginn einer Periode des Rastersignals (RS) in den zweiten Bildspeicher ($SP_S$) geschriebenen Bildzeile ermittelt wird.

5. Verfahren nach Anspruch 4,
**dadurch gekennzeichnet,**
**dass** die weitere Phasenverschiebung ($SHIFT_S$) eingestellt wird, wenn die zu Beginn einer Periode des Rastersignals (RS) in den zweiten Bildspeicher ($SP_S$) geschriebene Bildzeile zwischen einer ersten kritischen Zeile ($LIN_{CRIT1}$) und einer zweiten kritischen Zeile ($LIN_{CRIT2}$) liegt.

**6.** Verfahren nach Anspruch 4,
**dadurch gekennzeichnet,**
**dass** zur Darstellung der zweiten Bildfolge (S) in dem Gesamtbild aus dem Halbbildspeicher (SPA$_S$, SPB$_S$) ausgelesen wird, der gerade beschrieben wird, wenn die zu Beginn einer Periode des Rastersignals (RS) in den zweiten Bildspeicher (SP$_S$) geschriebene Bildzeile oberhalb einer ersten kritischen Zeile (LIN$_{CRIT1}$) liegt;
**dass** zur Darstellung der zweiten Bildfolge (S) in dem Gesamtbild aus dem Halbbildspeicher (SPA$_S$, SPB$_S$) ausgelesen wird, der gerade nicht beschrieben wird, wenn die zu Beginn einer Periode des Rastersignals (RS) in den zweiten Bildspeicher (SP$_S$) geschriebene Bildzeile unterhalb einer zweiten kritischen Zeile (LIN$_{CRIT2}$) liegt; und
**dass** zur Darstellung der zweiten Bildfolge (S) in dem Gesamtbild aus dem zuletzt beschriebenen Halbbildspeicher (SPA$_S$, SPB$_S$) ausgelesen wird, wenn zu Beginn einer Periode des Rastersignals (RS) kein Halbbildspeicher (SPA$_S$, SPB$_S$) beschrieben wird.

**7.** Verfahren nach Anspruch 5 oder 6,
**dadurch gekennzeichnet,**
**dass** sich die erste kritische Zeile LIN$_{CRIT1}$ berechnet zu

$$LIN_{CRIT1} = \left( t_{ACT1} - \frac{t_{ACT1}}{2 \cdot DF_S} \right) \cdot \frac{n}{t_{ACT1}}$$

wobei t$_{ACT1}$ die zum Abspeichern eines Halbbildes in den jeweiligen Halbbildspeicher (SPA$_M$; SPB$_M$; SPA$_S$, SPB$_S$) erforderliche Zeitdauer, n die Zeilenanzahl des dezimierten Bildes und DF$_S$ den zweiten Dezimierungsfaktor bezeichnet.

**8.** Verfahren nach einem der Ansprüche 5 bis 7,
**dadurch gekennzeichnet,**
**dass** sich die zweite kritische Zeile LIN$_{CRIT2}$ berechnet zu

$$LIN_{CRIT2} = t_{FLD2} \cdot \frac{n}{t_{ACT1}}$$

wobei t$_{ACT1}$ die zum Abspeichern eines Halbbildes in den jeweiligen Halbbildspeicher (SPA$_M$; SPB$_M$; SPA$_S$, SPB$_S$) erforderliche Zeitdauer, n die Zeilenanzahl des dezimierten Bildes und t$_{FLD2}$ der zeitliche Abstand zweier Auslesevorgänge ist.

**9.** Verfahren nach einem der Ansprüche 3 bis 8,
**dadurch gekennzeichnet,**
**dass** sich die erste Phasenverschiebung t$_x$ des Rastersignals (RS) berechnet zu

$$t_x = t_{ACT1} - \frac{t_{ACT1}}{2 \cdot DF_M}$$

wobei t$_{ACT1}$ die zum Abspeichern eines Halbbildes in den jeweiligen Halbbildspeicher (SPA$_M$; SPB$_M$; SPA$_S$, SPB$_S$) erforderliche Zeitdauer und DF$_M$ den ersten Dezimierungsfaktor bzeichnet.

**10.** Verfahren nach einem der vorhergehenden Ansprüche,
**dadurch gekennzeichnet,**
**dass** das Auslesen der Bilddaten aus dem ersten Bildspeicher (SP$_M$) nach Maßgabe eines ersten Positionssignals (POS$_M$) und das Auslesen der Bilddaten aus dem zweiten Bildspeicher (SP$_S$) nach Maßgabe eines zweiten Positionssignals (POS$_S$) erfolgt.

**11.** Vorrichtung zur Darstellung von wenigstens einer ersten und zweiten Bildfolge (M; S) in einem Gesamtbild, mit einem ersten Bildspeicher (SP$_M$) zum Abspeichern von zu Bildern der ersten Bildfolge (M) gehörenden ersten Bilddatensignalen, der einen ersten Halbbildspeicher (SPA$_M$) und einen zweiten Halbbildspeicher (SPB$_M$) zum Abspeichern von Halbbildern (A$_M$, B$_M$) der ersten Bildfolge (M) aufweist;

einem zweiten Bildspeicher ($SP_S$) zum Abspeichern von zu Bildern der zweiten Bildfolge (S) gehörenden zweiten Bilddatensignalen, der einen ersten Halbbildspeicher ($SPA_S$) und einen zweiten Halbbildspeicher ($SPB_S$) zum Abspeichern von Halbbildern ($A_S$, $B_S$) der zweiten Bildfolge (S) aufweist; und

einem Rastergenerator (RAG) zur Erzeugung eines periodischen Rastersignals (RS), welches bezüglich der Bilddatensignale phasenverschoben ($SHIFT_M$; $SHIFT_S$; $t_X$) ist,

**dadurch gekennzeichnet,**

**dass** die Vorrichtung ein erstes Dezimierungsfilter ($DEF_M$) und ein zweites Dezimierungsfilter ($DEF_S$) zur Dezimierung der ersten und zweiten Bildfolge (M; S) in dem Gesamtbild um einen ersten Dezimierungsfaktor ($DF_M$) bzw. einen zweiten Dezimierungsfaktor ($DF_S$) aufweist; und

**dass** die Phasenverschiebung ($SHIFT_M$; $SHIFT_S$; $t_x$) des Rastersignals (RS) abhängig von dem ersten und zweiten Bilddatensignal und von dem ersten und zweiten Dezimierungsfaktor ($DF_M$; $DF_S$) einstellbar ist.

**12.** Vorrichtung nach Anspruch 11,
**dadurch gekennzeichnet,**
**dass** der Rastergenerator (RAG) mit einem Mittel ($PV_M$) zur Berechnung einer ersten Phasenverschiebung ($SHIFT_M$, $t_x$) des Rastersignals (RS) abhängig von dem ersten Bilddatensignal und dem ersten Dezimierungsfaktor ($DF_M$) verbunden ist.

**13.** Vorrichtung nach Anspruch 11 oder 12,
**dadurch gekennzeichnet,**
**dass** dem Rastergenerator (RAG) ein Rückkopplungszweig mit einem Mittel ($PV_S$) zur Berechnung einer weiteren Phasenverschiebung ($SHIFT_S$) nachgeschaltet ist, wobei dem Mittel ($PV_S$) zur Berechnung der weiteren Phasenverschiebung das Rastersignal (RS), der zweite Dezimierungsfaktor ($DF_S$) und ein Schreibzeigerpositionssignal ($WA_S$) des zweiten Bildspeichers ($SP_S$) zugeführt ist.

**14.** Vorrichtung nach einem der Ansprüche 11 bis 13,
**gekennzeichnet durch**
einen ersten und einen zweiten Positionsdekoder ($PD_M$; $PD_S$), denen das Rastersignal (RS) und jeweils ein erstes bzw. zweites Positionssignal ($POS_M$; $POS_S$) zugeführt ist und die zur Steuerung des Auslesens der Bilddaten an den ersten bzw. zweiten Bildspeicher ($SP_M$; $SP_S$) angeschlossen sind.

## Claims

**1.** A procedure for the representation of at least a first and second image sequence (M; S) in a complete image, said procedure having the following features:

- storage in a first image store ($SP_M$) of image data belonging to an image of the first image sequence (M) in the form of a first image data signal and storage in a second image store ($SP_s$) of image data belonging to an image of the second image sequence (S) in the form of a second image data signal, the first and second image sequence (M; S) in each case consisting of a sequence of fields ($A_M$, $B_M$; $A_S$, $B_S$), image data of first fields ($A_M$; $A_S$) in each case being stored in a first field store ($SPA_M$; $SPA_S$) and image data of second fields ($B_M$; $B_S$) in each case being stored in a second field store ($SPB_M$; $SPB_S$) of the image stores ($SP_M$; $SP_S$);
- reading out of image data from the first and second image store ($SP_M$; $SP_S$) in such a way that a representation of the complete image is carried out in a first and second line raster ($\alpha$, $\beta$), which are in each case repeated in immediate succession, the reading of the image data with respect to the image data signals being carried out in phase-shifted form ($SHIFTM$; $SHIFT_S$; $t_x$) in accordance with a raster signal (RS),

**characterized in that** the first and second image sequences (M; S) in the complete image are represented in decimated form, corresponding to a first decimation factor ($DF_M$) and a second decimation factor ($DF_S$), respectively; and
that the phase shift ($SHIFT_M$; $SHIFT_S$; $t_x$) of the raster signal (RS) is adjusted, depending on the first and second image data signal and the first and second decimation factor ($DF_M$; $DF_S$).

**2.** The procedure as claimed in claim 1, **characterized in that**, prior to storage in the respective image stores ($SP_M$; $SP_S$), the first and second image data signals are decimated by the first and second decimation factor ($DF_M$; $DF_S$), respectively.

3. The procedure as claimed in claim 1 or 2, **characterized in that** the phase shift ($SHIFT_M$; $SHIFT_S$; $t_x$) of the raster signal (RS) is adjusted step by step, a first phase shift being adjusted, depending on the first image data signal and the first decimation factor ($DF_M$) and an additional phase shift ($SHIFT_S$) being adjusted, depending on the phase position of the second image data signal in relation to the raster signal (RS) with the first phase shift ($SHIFT_M$; $t_x$) and on the second decimation factor ($DF_S$).

4. The procedure as claimed in claim 3, **characterized in that** the image data of the second image sequence (S) are stored line by line in the second image store ($SP_s$); and
that the phase position of the second image data signal in relation to the raster signal (RS) with the first phase shift ($SHIFT_M$; $t_x$) is determined, using the image line that, at the beginning of a period of the raster signal (RS), is written to the second image store ($SP_S$).

5. The procedure as claimed in claim 4, **characterized in that** the additional phase shift ($SHIFT_S$) is adjusted if the image line that, at the beginning of a period of the raster signal (RS), is written to the second image store ($SP_S$) lies between a first critical line ($LIN_{CRIT1}$) and a second critical line ($LIN_{CRIT2}$).

6. The procedure as claimed in claim 4, **characterized in that**, for the representation of the second image sequence (S) in the complete image, the field store ($SPA_S$; $SPB_S$) is read out which is being written to at the time, if the image line that, at the beginning of a period of the raster signal (RS), is written to the second image store ($SP_S$), lies above a first critical line ($LIN_{CRIT1}$);
and that, for the representation of the second image sequence (S) in the complete image, the field store ($SPA_S$; $SPB_S$) is read out which is not being written to at the time, if the image line that, at the beginning of a period of the raster signal (RS), is written to the second image store ($SP_S$), lies below a second critical line ($LIN_{CRIT2}$);
and
that in order to represent the second image sequence (S) in the complete image, the field store ($SPA_S$; $SPB_S$) that was last written to is read out if, at the beginning of a period of the raster signal (RS), no field store ($SPA_S$; $SPB_S$) is being written to.

7. The procedure as claimed in claim 5 or 6, **characterized in that** the first critical line $LIN_{CRIT1}$ is determined by

$$LIN_{CRIT1} = \left( t_{ACT1} - \frac{t_{ACT1}}{2 \cdot DF_S} \right) \cdot \frac{n}{t_{ACT1}},$$

where $t_{ACT1}$ denotes the length of time required to store a field in the respective field store ($SPA_M$; $SPB_M$; $SPA_S$; $SPB_S$), n the number of lines of the decimated image and $DF_S$ the second decimation factor.

8. The procedure as claimed in one of the claims 5 to 7, **characterized in that** the second critical line is determined by

$$LIN_{CRIT2} = t_{FLD2} \cdot \frac{n}{t_{ACT1}},$$

where $t_{ACT1}$ denotes the length of time required to store a field in the respective field store (SPAM; $SPB_M$; $SPA_S$; $SPB_S$), n the number of lines of the decimated image and $t_{FLD2}$ the time difference between two read-out processes.

9. The procedure as claimed in one of the claims 3 to 8, **characterized in that** the first phase shift $t_x$ of the raster signal (RS) is determined by

$$t_x = t_{ACT1} - \frac{t_{ACT1}}{2 \cdot DF_M},$$

where $t_{ACT1}$ denotes the length of time required to store a field in the respective field store ($SPA_M$; $SPB_M$; $SPA_S$; $SPB_S$) and $DF_M$ the first decimation factor.

**10.** The procedure as claimed in one of the preceding claims, **characterized in that** the image data from the first image store ($SP_M$) are read out in accordance with a first position signal ($POS_M$) and the image data from the second image store ($SP_S$) are read out in accordance with a second position signal ($POS_S$).

**11.** A device for the representation of at least a first and second image sequence (M; S) in a complete image, with a first image store ($SP_M$) for the storage of first image data signals belonging to images of the first image sequence (M), the first image store ($SP_M$) containing a first field store ($SPA_M$) and a second field store ($SPB_M$) for the storage of fields ($A_M$, $B_M$) of the first image sequence (M);
a second image store ($SP_S$) for the storage of second image data signals belonging to images of the second image sequence (S), the second image store ($SP_s$) containing a first field store ($SPA_S$) and a second field store ($SPB_S$) for the storage of fields ($A_S$, $B_S$) of the second image sequence (S); and
a raster generator (RAG) for the generation of a periodic raster signal (RS) which is phase-shifted ($SHIFT_M$; $SHIFT_S$; $t_x$) in relation to the image data signals,
**characterized in that** the device has a first decimation filter ($DEF_M$) and a second decimation filter ($DEF_S$) for the decimation of the first and second image
sequence (M; S) in the complete image by a first decimation factor ($DF_M$) and a second decimation factor ($DF_S$), respectively; and
that the phase shift ($SHIFT_M$; $SHIFT_S$; $t_x$) of the raster signal (RS) can be adjusted, depending on the first and second image data signal and the first and second decimation factor ($DF_M$; $DF_S$).

**12.** The device as claimed in claim 11, **characterized in that** the raster generator (RAG) is connected to a means ($PV_S$) for the computation of a first phase shift ($SHIFT_M$, $t_x$) of the raster signal (RS), depending on the first image data signal and the first decimation factor ($DF_M$).

**13.** The device as claimed in claim 11 or 12, **characterized in that** a feedback branch with a means ($PV_S$) for the computation of an additional phase shift ($SHIFT_S$) is post-connected to the raster generator (RAG); the raster signal (RS), the second decimation factor ($DF_S$), and a write pointer position signal ($WA_S$) of the second image store ($SP_S$) are fed to the means ($PV_S$) for the computation of the additional phase shift.

**14.** The device as claimed in one of the claims 11 to 13, **characterized in that** a first and second position decoder ($PD_M$; $PD_S$) receive the raster signal (RS) and a first and second position signal ($POS_M$; $POS_S$), respectively, and that they are connected to the first and second image store ($SP_M$; $SP_S$), respectively, in order to control the read-out of the image data.

**Revendications**

**1.** Procédé pour représenter au moins une première et une seconde suite d'images (M ; S) d'une image globale, ce procédé comprenant les caractéristiques suivantes :

- on enregistre les données d'image appartenant à une image de la première suite d'images (M) sous la forme d'un premier signal de données d'image dans une première mémoire d'image ($SP_M$) et on enregistre les données d'image d'une image de la seconde suite d'images (S) sous la forme d'un second signal de données d'image dans une seconde mémoire d'image ($SP_s$), la première et la seconde suite d'images (M ; S) se composent chaque fois d'une suite de demi-images ($A_M$, $B_M$ ; $A_S$, $B_S$) et les données d'image des premières demi-images ($A_M$ ; $A_S$) sont enregistrées respectivement dans une première mémoire de demi-images ($SPA_M$ ; $SPA_S$) et les données d'image des secondes demi-images ($B_M$ ; $B_S$) sont enregistrées dans une seconde mémoire de demi-images ($SPB_M$ ; $SPB_S$) des mémoires d'image ($SP_M$ ; $SP_S$),
- on lit les données d'image de la première et la seconde mémoire d'image ($SP_M$ ; $SP_S$) de façon à obtenir une représentation de l'image globale dans une première et une seconde trame de lignes ($\alpha$, $\beta$) qui sont répétées chaque fois directement de manière successive, la lecture des données d'image étant faite par rapport aux signaux de données d'image selon un signal de données d'image décalé ($SHIFT_M$ ; $SHIFT_S$ ; $t_X$) par rapport aux signaux de données d'image selon un signal de trame périodique (RS),

**caractérisé en ce que**
on représente la première et la seconde suite d'images (M ; S) dans l'image globale en fonction d'un premier coefficient de décimation ($DF_M$) ou d'un second coefficient de décimation ($DF_s$) par une représentation décimée et le déphasage ($SHIFT_M$ ; $SHIFT_S$ ; $t_X$) du signal de trame (RS) est réglé en fonction du premier et du second signal de données d'image et d'un premier et d'un second coefficient de décimation ($DF_M$ ; $DF_S$).

2. Procédé selon la revendication 1,
   **caractérisé en ce que**
   les premiers et les seconds signaux de données d'images sont décimés selon un premier et un second facteur de décimation ($DF_M$ ; $DF_S$) avec leur enregistrement dans les mémoires d'image respectives ($SP_M$ ; $SP_S$).

3. Procédé selon la revendication 1 ou 2,
   **caractérisé en ce que**
   le réglage du déphasage ($SHIFT_M$ ; $SHIFT_S$ ; $t_X$) du signal de trame (RS) se fait pas à pas, un premier déphasage ($SHIFT_M$ ; $t_X$) se faisant en fonction du premier signal de données d'image et du premier coefficient de décimation ($DF_M$) et un autre déphasage ($SHIFT_S$) se faisant en fonction de la position de phase du second signal de données d'image par rapport au signal de trame (RS) avec le premier déphasage ($SHIFT_M$ ; $t_x$) et avec le second coefficient de décimation ($DF_S$).

4. Procédé selon la revendication 3,
   **caractérisé en ce qu'**
   on enregistre les données d'image de la seconde suite d'images (S) ligne par ligne dans la seconde mémoire d'image ($SP_S$) et
   on détermine la phase du second signal de données d'image par rapport à celle du signal de trame (RS) avec le premier déphasage ($SHIFT_M$ ; $t_X$) en utilisant la relation d'une période du signal de trame (RS) dans les lignes d'image inscrites dans la seconde mémoire d'image ($SP_s$).

5. Procédé selon la revendication 4,
   **caractérisé en ce qu'**
   on règle l'autre déphasage ($SHIFT_s$) si la ligne d'image inscrite au début d'une période du signal de trame (RS) dans la seconde mémoire d'image ($SP_s$) se situe entre une première ligne critique ($LIN_{CRIT1}$) et une seconde ligne critique ($LIN_{CRIT2}$).

6. Procédé selon la revendication 4,
   **caractérisé en ce que**
   pour représenter la seconde suite d'images (S) dans l'image globale on l'extrait de la mémoire de demi-image ($SPA_S$, $SPB_S$) dans laquelle on vient d'inscrire si la ligne d'image inscrite au début d'une période du signal de trame (RS) dans la seconde mémoire d'image ($SP_s$) se situe au-dessus d'une première ligne critique ($LIN_{CRIT1}$),
   pour représenter la seconde suite d'image (S) dans l'image globale on l'extrait de la mémoire de demi-image ($SPA_S$, $SPB_S$) qui ne vient pas d'être inscrite si la ligne d'image inscrite au début d'une période du signal de trame (RS) dans la seconde mémoire d'image ($SP_s$) se situe en dessous d'une seconde ligne critique ($LIN_{CRIT2}$) et
   pour représenter la seconde suite d'image (S) dans l'image globale on l'extrait de la mémoire de demi-image ($SPA_S$, $SPB_S$) dans laquelle on vient d'inscrire en dernier lieu si au début d'une période du signal de trame (RS) on n'a pas inscrit dans une mémoire de demi-image ($SPA_s$, $SPB_S$).

7. Procédé selon la revendication 5 ou 6,
   **caractérisé en ce que**
   la première ligne critique $LIN_{CRIT1}$ se calcule comme suit :

$$LIN_{CRIT1} = \left( t_{ACT1} - \frac{t_{ACT1}}{2 \cdot DF_S} \right) \cdot n / t_{ACT1}$$

relation dans laquelle $t_{ACT1}$ représente la durée nécessaire pour enregistrer une demi-image dans la mémoire de demi-image respective ($SPA_M$, $SPB_M$ ; $SPA_S$, $SPB_S$),
n représente le nombre de lignes de l'image décimée et $DF_S$ représente le second coefficient de décimation.

8. Procédé selon l'une des revendications 5 à 7,
   **caractérisé en ce que**

la seconde ligne critique $LIN_{CRIT2}$ se calcule selon la formule suivante :

$$LIN_{CRIT2} = t_{FLD2} \bullet n/t_{ACT1}$$

dans laquelle $t_{ACT1}$ représente la durée nécessaire pour enregistrer une demi-image dans la mémoire de demi-image respective ($SPA_M$ ; $SPB_M$ ; $SPA_s$, $SPB_S$),
n représente le nombre de lignes de l'image décimée et $t_{FLD2}$ représente la distance dans le temps de deux opérations de lecture.

9. Procédé selon l'une des revendications 3 à 8,
   **caractérisé en ce que**
   le premier déphasage ($t_X$) du signal de trame (RS) se calcule selon la formule suivante :

$$t_x = t_{ACT1} - \frac{t_{ACT1}}{2 \cdot DF_M}$$

dans laquelle $t_{ACT1}$ représente la durée nécessaire à l'enregistrement d'une demi-image dans la mémoire de demi-image respective ($SPA_M$ ; $SPB_M$ ; $SPA_S$, $SPB_S$) et $DF_M$ représente le premier coefficient de décimation.

10. Procédé selon l'une des revendications précédentes,
    **caractérisé en ce que**
    la lecture des données image à partir de la première mémoire d'image ($SP_M$) après indication d'un premier signal de position ($POS_M$) et la lecture des données d'image de la seconde mémoire d'image (SPs) se font selon l'indication d'un second signal de position ($POS_S$).

11. Dispositif de représentation d'au moins une première et une seconde suite d'images (M ; S) dans une image globale, avec une première mémoire d'image ($SP_M$) pour enregistrer les signaux de données d'image correspondant aux images de la première suite d'images (M), et qui comporte une première mémoire de demi-images ($SPA_M$) et une seconde mémoire de demi-images ($SPB_M$) pour enregistrer les demi-images ($A_M$, $B_M$) de la première suite de bits (M) ;
    une seconde mémoire d'image ($SP_s$) pour enregistrer les seconds signaux de données d'image correspondant aux images de la seconde suite d'image (S) et ayant une première mémoire de demi-images ($SPA_S$) et une seconde mémoire de demi-images ($SPB_S$) pour enregistrer des semi-conducteurs ($A_S$, $B_S$) de la seconde suite d'images (S) et
    un générateur de trame (RAG) pour générer un signal de trame périodique (RS) déphasé ($SHIFT_M$ ; $SHIFT_S$ ; $t_X$) par rapport aux signaux de données d'image,
    **caractérisé en ce que**
    le dispositif comporte un premier filtre de décimation ($DEF_M$) et un second filtre de décimation ($DEF_S$) pour décimer la première et la seconde suite d'images (M ; S) dans l'image globale, selon un premier coefficient de décimation ($DF_M$) ou un second coefficient de décimation ($DF_S$) et
    le déphasage ($SHIFT_M$ ; $SHIFT_S$ ; $t_X$) du signal de trame (RS) se règle en fonction du premier et du second signal de données d'images et du premier et du second coefficient de décimation ($DF_M$ ; $DF_s$).

12. Dispositif selon la revendication 11,
    **caractérisé en ce que**
    le générateur de trame (RAG) comporte un moyen ($PV_M$) pour calculer un premier déphasage ($SHIFT_M$, $t_X$) du signal de trame (RS) en fonction du premier signal de données d'image et du premier coefficient de décimation ($DF_M$).

13. Dispositif selon la revendication 11 ou 12,
    **caractérisé en ce qu'**
    une branche de réaction avec un moyen ($PV_s$) pour calculer un autre déphasage ($SHIFT_S$) est prévue en aval du générateur de trame (RAG),
    le moyen ($PV_S$) pour calculer l'autre déphasage recevant le signal de trame (RS), le second coefficient de décimation ($DF_s$) et un signal de position d'index d'écriture ($WA_S$) de la seconde mémoire d'image ($SP_s$).

**14.** Dispositif selon l'une des revendications 11 à 13,
**caractérisé par**
un premier et un second décodeur de position ($PD_M$ ; $PD_S$) recevant le signal de trame (RS) et chaque fois un premier et un second signal de position ($POS_M$ ; $POS_S$), et auxquels sont reliées la première et la seconde mémoire d'image ($SP_M$ ; $SP_S$) pour commander la lecture des données d'image.

FIG 1

FIG 2a

SPA_M

FIG 2b

SPB_M

FIG 2c

EP 1 151 605 B1

FIG 3

FIG 4